Europäisches Patentamt

European Patent Office

Office européen des brevets

(11) Veröffentlichungsnummer: **0 044 811**

**A1**

(12) # EUROPÄISCHE PATENTANMELDUNG

(21) Anmeldenummer: **81810287.3**

(22) Anmeldetag: **16.07.81**

(51) Int. Cl.³: **F 24 J 3/02**
**E 04 D 1/04**

(30) Priorität: **22.07.80 CH 5580/80**

(43) Veröffentlichungstag der Anmeldung:
**27.01.82 Patentblatt 82/4**

(84) Benannte Vertragsstaaten:
**AT BE CH DE FR GB IT LI LU NL SE**

(71) Anmelder: **Aroka Holding AG**
**Althau 489**
**CH-5303 Würenlingen(CH)**

(72) Erfinder: **Heierli, Werner**
**Elsastrasse 6**
**CH-4600 Olten(CH)**

(74) Vertreter: **Hepp, Dieter et al,**
**Hepp & Partner AG Buebenloostrasse 22**
**CH-9500 Wil(CH)**

(54) **Bedachungselement für den Transport einer Wärmeübertragungsflüssigkeit und Verfahren zu dessen Herstellung.**

(57) Eine als Sonnenkollektor wirkende Bedachung besteht aus einzelnen Bedachungselementen (1), welche mit Hohlkanälen (2) versehen sind. Die Kanäle haben eine gegen die obere Begrenzungsebene (18) gerichtete Eintrittsöffnung (3) und eine gegen die untere Begrenzungsebene (19) gerichtete Austrittsöffnung (4), so dass die einander überlappenden Bedachungselemente ein durchgehendes Kanalsystem bilden. Die Bedachungselemente sind ausserdem aus zwei Materialhälften (5 und 6) zusammengefügt, welche unterschiedliche thermische Eigenschaften aufweisen. Die untere Hälfte (5) wirkt als Isolator, während die obere Hälfte (6) eine gute Wärmeleitfähigkeit besitzt. Die Bedachungselemente sind von aussen nicht von herkömmlichen Dachziegeln zu unterscheiden. Bei entsprechender Anordnung der Kanäle ist ausserdem eine kreuzweise Schichtung der Ziegel möglich. Ein aus derartigen Elementen bestehender Kollektor hat einen optimalen Wirkungsgrad, ohne dass dabei ästhetische Nachteile in Kauf genommen werden müssen.

Fig. 1

**0044811**

Aroka Holding AG, Würenlingen

Bedachungselement für den Transport einer
Wärmeübertragungsflüssigkeit und Verfahren zu dessen Herstellung.

Die Erfindung betrifft ein Bedachungselement für zur Horizontalen geneigte Dächer, insbesondere Dachziegel, für den Transport
einer Wärmeübertragungsflüssigkeit. Derartige Bedachungselemente
dienen gleichzeitig als Dachdeckung und als Sonnenkollektor. Es
sind bereits Bedachungselemente bekannt, bei denen auf einem
Bodenelement parallel verlaufende Rohrleitungen verlegt werden,
wobei paarweise die Rohrleitungen noch mit einem Deckelement
versehen werden. Der Aufbau dieser Bedachung ist relativ kompliziert und befriedigt vom ästhetischen Gesichtspunkt her in
keiner Weise. Um für die Bedachung normale Ziegel verwenden zu
können, wurden daher sogenannte Dachkollektoren unmittelbar
unter der Ziegelschicht angebracht. Dieses System hat jedoch
einen relativ schlechten Wirkungsgrad, da die Wärmeübertragung
von den Ziegeln auf den Kollektor über eine relativ schlecht
wärmeleitende Luftschicht erfolgt.

Es ist daher Aufgabe der Erfindung, die Nachteile des Bekannten
zu vermeiden und ein Bedachungselement der eingangs genannten
Art zu schaffen, welches bezüglich der Wärmeübertragung einen optimalen Wirkungsgrad aufweist und welches auch in ästhetischer Hinsicht befriedigt. Das Bedachungselement soll ausserdem ohne nennenswerten Mehraufwand die Dachdeckung wie bei gewöhnlichen Ziegeldächern ermöglichen.

Diese Aufgabe wird erfindungsgemäss dadurch gelöst, dass das Bedachungselement wenigstens einen, zwischen seiner oberen und unteren Begrenzungsebene verlaufenden Hohlkanal aufweist, und dass der Hohlkanal eine gegen die obere Begrenzungsebene gerichtete Eintrittsöffnung und eine gegen die untere Begrenzungsebene gerichtete Austrittsöffnung aufweist, so dass die Öffnungen einander überlappender Bedachungselemente zur Bildung eines durchgehenden Kanals aneinander anschliessbar sind.

Auf diese Weise wird durch das Bedachungselement selbst eine Transportleitung für die Wärmeübertragungsflüssigkeit gebildet. Die Transportleitung ist von aussen nicht sichtbar und die Bedachungselemente können in herkömmlicher Bauweise einander überlappend verlegt werden. Die thermischen Verluste sind ausserdem sehr gering, da durch die Übertragungsflüssigkeit dem Dach unmittelbar Wärme entzogen wird. Die Dachfläche hat dementsprechend eine relativ niedrige Temperatur. Bei einer Unterdach-Absorption gemäss den bekannten Verfahren steigt die Temperatur der Dachfläche stark an, was zum Verlust bedeutender Energiemengen führt. Das Bedachungselement ermöglicht ausserdem die optimale Ausnutzung der gesamten Dachfläche, auch wenn diese beispielsweise durch Luken oder Erker unterbrochen wird.

Eine optimale thermische Wirkung kann erzielt werden, wenn das Bedachungselement aus zwei in der Dachebene verlaufenden Materialhälften gefertigt ist, wobei die untere Hälfte eine schlechte und die obere Hälfte eine gute Wärmeleitfähigkeit aufweist. Dadurch wirkt die untere Materialhälfte als wärmedämmende Schicht, so dass nach unten keine Wärme abgestrahlt werden kann.

Die gut wärmeleitende obere Materialhälfte führt zu einem optimalen Wirkungsgrad bei der Wärmeübertragung auf die Übertragungsflüssigkeit.

Die unterschiedlichen thermischen Eigenschaften der beiden Materialhälften lassen sich auf besonders einfache Weise erzielen, wenn das Bedachungselement aus gesinterten Mineralstoffen gefertigt ist, wobei die untere Hälfte eine mit Hohlräumen und/oder Isolierkörpern durchsetzte Struktur aufweist und die obere Hälfte mit thermisch gut leitenden Substanzen durchsetzt ist. Dadurch kann das Bedachungselement aus Lehm, Ton oder tonigen Massen mit Zusätzen von Sand und anderen Magerungsmitteln gefertigt werden. Das Element hat daher das gleiche Aussehen und ähnliche Eigenschaften wie ein herkömmlicher Dachziegel. Die Hohlräume oder Isolierkörper in der unteren Hälfte verschlechtern die Wärmeleitfähigkeit, so dass ein Isolationseffekt eintritt. Als thermisch gut leitende Substanzen werden vorteilhaft Eisen- und/oder Kohlenstoffverbindungen verwendet. Um die thermische Eigenschaft der oberen Hälfte noch zu verbessern, kann diese mit die Wärmeabsorption erhöhenden Farbpigmenten wie z.B. $Fe_2O_3$ angereichert sein. Der thermische Wirkungsgrad kann ausserdem dadurch erhöht werden, dass der Hohlkanal in der oberen Hälfte angeordnet ist. Dadurch kommt die Wärmeübertragungsflüssigkeit vorwiegend mit der oberen, thermisch gut leitenden Hälfte in Berührung.

Wenn das Bedachungselement zwei etwa parallel verlaufende Hohlkanäle aufweist, können die Elemente derart versetzt angeordnet werden, dass jeweils der rechte Hohlkanal eines oberen Elementes in den linken Hohlkanal des darunter liegenden Elementes mündet.

Um eine optimale mittlere Wärmeausbeute sicherzustellen, können die Hohlkanäle mäander- oder wellenförmig verlaufen. Wenn die Eintrittsöffnung einen grösseren Durchmesser aufweist als die Austrittsöffnung, ist ein sicherer Übergang der Wärmeübertragungsflüssigkeit an den Verbindungsstellen gewährleistet. Das Aneinanderfügen der Austritts- und Eintrittsöffnungen kann ausserdem noch dadurch erleichtert werden, dass die Austrittsöffnung in einer vorspringenden Nase angeordnet ist. Selbst bei einer ungenauen Verlegung der Bedachungselemente wird dadurch ein sicherer Übertritt der Flüssigkeit gewährleistet.

Beim Einbau einer Strömungsdrossel im Bereich der Austrittsöffnung kann auf einfache Weise sichergestellt werden, dass der Hohlkanal immer gefüllt bleibt und thermische Verluste durch Strömungsabriss an den Wänden des Hohlkanals vermieden werden. Die Strömungsdrossel kann entweder beim Bedachungselement angeformt oder als zusätzliches Teil, beispielsweise in der Form eines Kunststoffzapfens mit Bohrung, im Bereich der Austrittsöffnung angeordnet sein.

Um bei starkem Wind eine zu starke Abkühlung der Dachoberfläche zu vermeiden, können die Bedachungselemente zur Dämpfung der Windströmung eine strukturierte Oberfläche aufweisen.

Die Erfindung betrifft ausserdem ein Verfahren zur Herstellung eines Dachziegels aus mineralischen Materialien mit wenigstens einem Hohlkanal und mit einer oberen und einer unteren Hälfte mit unterschiedlichen Materialeigenschaften. Ein Bedachungselement der vorstehend beschriebenen Art kann auf einfache Weise hergestellt werden, wenn das Material für die untere Hälfte mit einem bei Wärmezufuhr sein Volumen verringernden Zuschlagstoff vermischt wird, die untere und die obere Hälfte als Vorformlinge gebildet werden, wobei in die obere Hälfte wenigstens ein Hohlkanal gepresst wird, und wenn die beiden Hälften sodann zusammengepresst und gesintert werden, wobei der sein Volumen verringernde Zuschlagstoff in der unteren Hälfte eine poröse Materialstruktur erzeugt.

Durch die Herstellung des Bedachungselementes aus zwei separaten Teilen lässt sich der Hohlkanal ohne weiteres und in jeder beliebigen Form anbringen. Gleichzeitig ermöglicht das Verfahren jedoch auch, die Materialeigenschaften der beiden Hälften zugunsten einer optimalen Wärmeausnutzung zu beeinflussen. Beim Zusammenpressen und Sintern der beiden Materialhälften entsteht ein kompaktes Element, welches festigkeitsmässig ungefähr die gleichen Eigenschaften aufweist wie ein herkömmlicher Dachziegel. Bei den hohen Temperaturen der Sinterung verbrennt oder schmilzt das beigefügte Material in der unteren Hälfte, so dass diese nach dem Sinterungsvorgang eine poröse Struktur aufweist. Je nach den beigemengten Zusätzen für die obere Hälfte kann deren Leitfähigkeit und Dichte beeinflusst werden.

Besonders gute Resultate lassen sich erzielen, wenn das Ausgangsmaterial für die untere Hälfte mit Holzspänen oder Holzmehl vermischt wird. Dieser Zusatz verursacht nur geringe Kosten und verbrennt beim Sinterungsvorgang ohne weiteres.

Um zu erreichen, dass der Hohlkanal allseitig von thermisch gut leitendem Material begrenzt ist, kann zwischen die beiden Hälften vor dem Sintern eine gut leitenden Zwischenschicht eingefügt werden. Insbesondere bei Strömungsabriss an den Wänden des Hohlkanals wird dadurch verhindert, dass die Flüssigkeit nur auf der schlecht leitenden unteren Hälfte fliesst.

Es wäre sogar denkbar, nur im Bereich der Hohlkanäle eine gut wärmeleitende Schicht auf die untere Hälfte aufzudampfen, aufzuspritzen oder sonstwie anzubringen.

Die Verwendung der beschriebenen Bedachungselemente für den Bau eines als Sonnenkollektor wirkenden Daches hat mehrere Vorteile. Das Dach kann von aussen her nicht von einem herkömmlichen Ziegeldach unterschieden werden, so dass beispielsweise bei Baugesuchen keine Probleme wegen der ästhetischen Wirkung eintreten können. Das Kollektor-System arbeitet drucklos, so dass nur geringe Energiemengen für die Umwälzung erforderlich sind. Ausserdem entfallen sämtliche Sicherheitsvorkehrungen, welche bei Überdruckanlagen erforderlich sind. Aufwendige Abdichtungen sind nicht erforderlich, da die Wasserführung wie beim Regenwasser im Kaskaden-Freifall verläuft. Auch die Verdunstung der Übertragungsflüssigkeit ist im Gegensatz zu den Unterdach-Berieselungssystemen äusserst gering, da die Flüssigkeit nur an den Übertrittsstellen mit Umgebungsluft in Berührung kommt.

Ein Ausführungsbeispiel der Erfindung ist in den Zeichnungen dargestellt und wird nachstehend genauer beschrieben. Es zeigen:

Figur 1   eine Seitenansicht einander überlappender Dachelemente,

Figur 2   einen Querschnitt durch ein Bedachungselement in etwas vergrösserter Darstellung,

Figur 3   eine Draufsicht auf versetzt angeordnete Bedachungselemente, und

Figur 4   ein Bedachungselement mit thermisch gut leitender Zwischenschicht, und

Figur 5   eine schematische Darstellung des Herstellungsverfahrens.

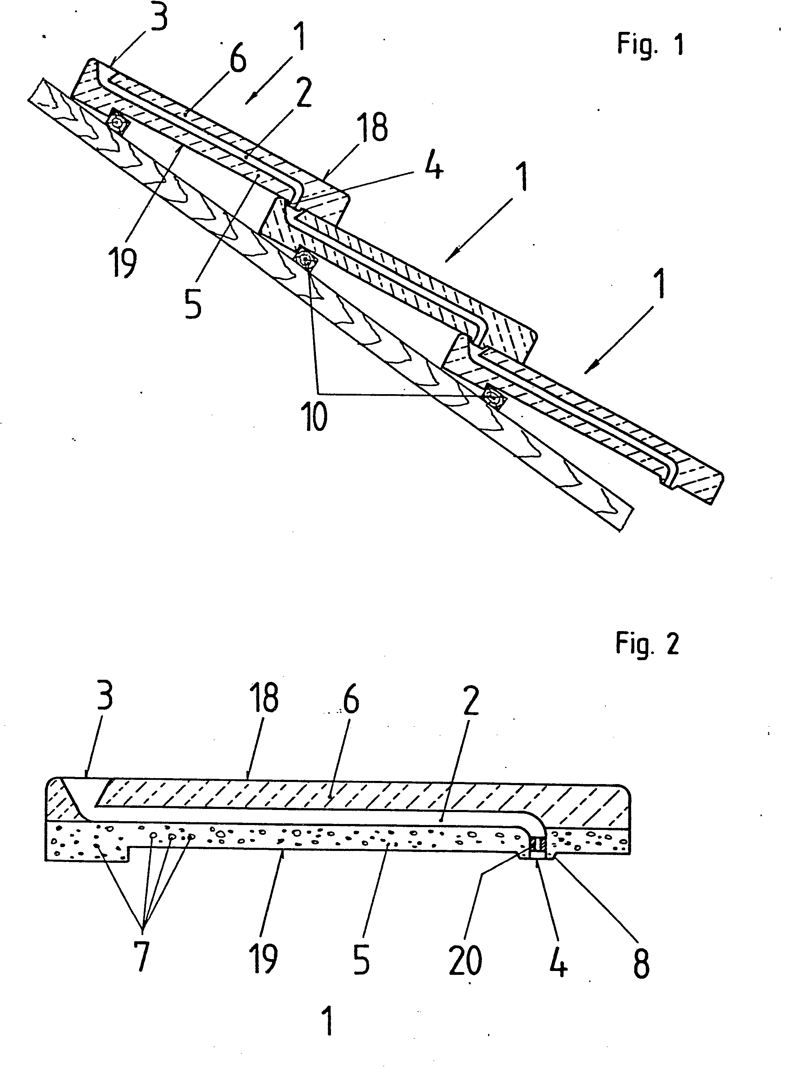

Figur 1 zeigt mehrere Bedachungselemente 1, welche nach der Art herkömmlicher Dachziegel einander gegenseitig überlappen und an den Dachlatten 10 eines Daches befestigt sind. Die Bedachungselemente haben im innern einen Hohlkanal 2 mit einer gegen die obere Begrenzungsebene 18 gerichteten Eintrittsöffnung 3 und einer gegen die untere Begrenzungsebene 19 gerichteten Austrittsöffnung 4. Die Eintritts- und Austrittsöffnungen liegen derart aneinander an, dass ein durchgehendes Kanalsystem entsteht. Diesem Kanalsystem wird vom nicht dargestellten Dachfirst her eine Wärmeübertragungsflüssigkeit zugeführt. Diese fliesst ohne Überdruck nach unten und erwärmt sich dabei durch die auf das Dach einfallenden Sonnenstrahlen oder durch die Umgebungswärme. Ersichtlicherweise müssen die Eintritts- und Austrittsöffnungen derart angeordnet sein, dass die Flüssigkeit unter Schwerkrafteinwirkung nach unten fliessen kann. Am unteren Ende des Daches wird die erwärmte Übertragungsflüssigkeit mit einer nicht dargestellten Sammelvorrichtung wieder gesammelt und beispielsweise einer Wärmepumpe zugeführt. Nach dem Entzug der in der Flüssigkeit gespeicherten Energie wird die Übertragungsflüssigkeit wieder auf Dachfirsthöhe gepumpt, um von neuem das Kanalsystem zu durchlaufen.

Wie aus Figur 2 besser ersichtlich ist, besteht das Bedachungselement aus einer unteren Hälfte 5 und einer oberen Hälfte 6 mit unterschiedlichen thermischen Eigenschaften. Die untere Hälfte 5 hat eine schlechte Wärmeleitfähigkeit und wirkt als Isolator, was beispielsweise mit Hohlräumen 7 bewirkt werden kann, welche über die ganze untere Hälfte verteilt sind. Dagegen hat die obere Hälfte 6 eine gute Leitfähigkeit, was durch Zusatz geeigneter Materialien bewirkt werden kann. Wie dargestellt ist der Hohlkanal 2 in der oberen Hälfte 6 angeordnet, so dass die Flüssigkeit möglichst nur mit der thermisch gut leitenden Materialhälfte in Berührung kommt. Der Durchmesser der Eintrittsöffnung 3 ist vorteilhaft grösser als der Durchmesser der Austrittsöffnung 4. Die Austrittsöffnung 4 ist ausserdem in einer etwas vorstehenden Nase 8 angeordnet. Die Nase 8 ragt jeweils in die darunterliegende Eintrittsöffnung 3, so dass ein sicherer Übergang der Flüssigkeit von Element zu Element gewährleistet ist. Der Durchmesser der Nase 8 wird vorteilhaft etwas kleiner gewählt als der Durchmesser der Eintrittsöffnung 3, so dass die Nase etwas Spiel hat und sich bei einer Verschiebung der Elemente z.B. unter Schneelast frei bewegen kann. Der Querschnitt der Eintritts- und Austrittsöffnungen wird ausserdem so gewählt, dass keine störenden Plätschergeräusche auftreten können. Im Bereich der Austrittsöffnung 4 ist eine Strömungsdrossel 20 angeordnet, welche bewirkt, dass der Hohlkanal 2 immer gefüllt bleibt und die Strömung entlang der Innenwandung nicht abreisst. Die Dimensionierung der Strömungsdrossel in Abhängigkeit von Druck, Menge und Strömungswiderstand im Hohlkanal ist dem Fachmann ohne weiteres möglich und wird daher hier nicht näher beschrieben.

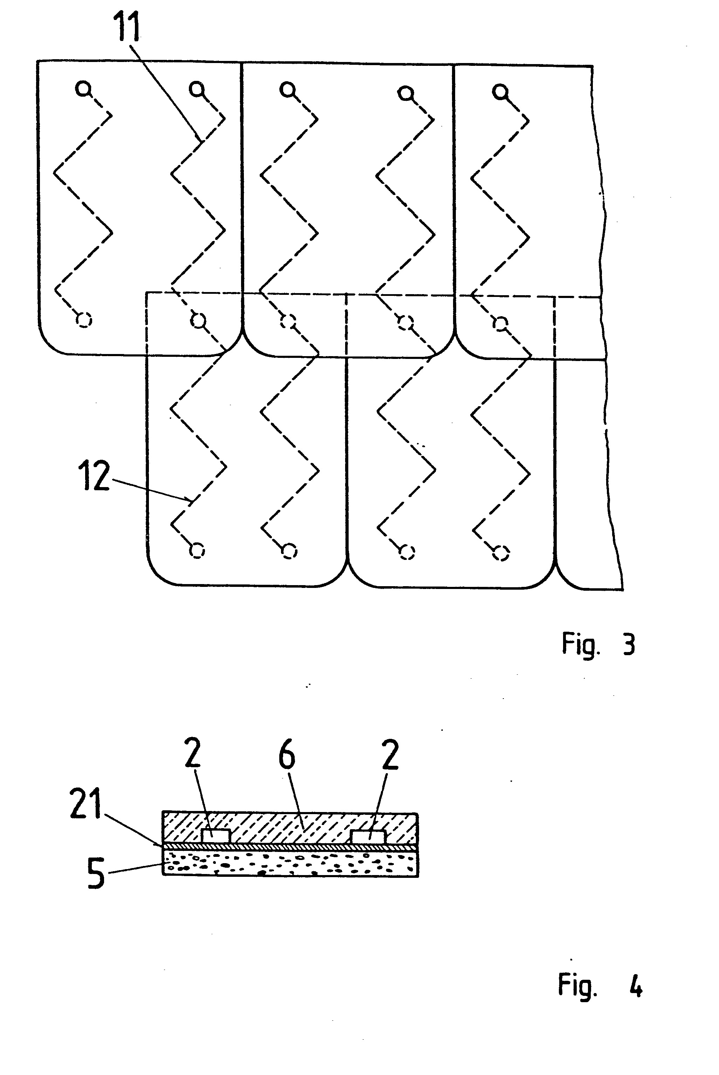

Figur 3 zeigt Bedachungselemente 1, welche in Kreuzschichtung angeordnet sind. Die Elemente weisen jeweils zwei etwa parallel verlaufende Hohlkanäle 2 auf, welche so angeordnet sind, dass ein rechter Kanal 11 eines oberen Elementes in einen linken Kanal 12 eines unteren Elementes einmündet. Die Hohlkanäle sind ausserdem zick-zack-förmig angeordnet.

Beim Bedachungselement gemäss Figur 4 ist zwischen den beiden Hälften 5 und 6 eine thermisch gut leitenden Zwichenschicht 21 angeordnet. Dadurch sind die Wände der Hohlkanäle 2 allseitig von gut wärmeleitendem Material umgeben.

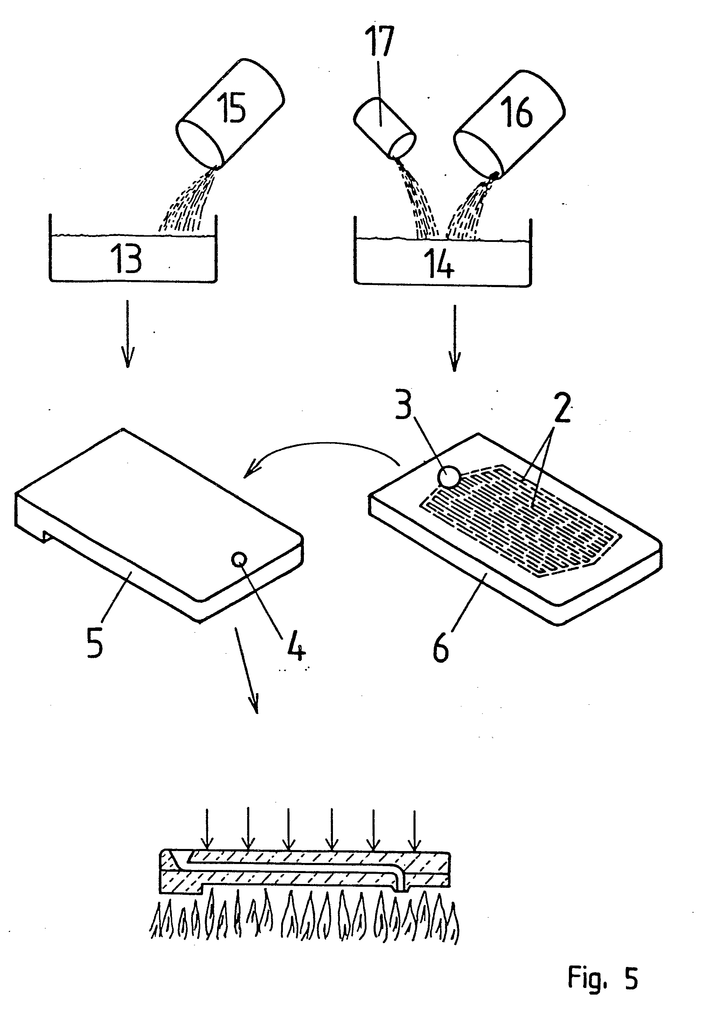

Wie in Figur 5 dargestellt, werden für die beiden Hälften des Bedachungselementes unterschiedliche Ausgangsmaterialien 13 und 14 verwendet. Beim Ausgangsmaterial 13 für die untere Hälfte wird eine leicht brennbare oder schmelzbare Substanz 15 beigemischt. Dagegen wird dem Ausgangsmaterial 14 für die obere, den Sonnenstrahlen ausgesetzte Hälfte eine die Wärmeleitfähigkeit erhöhende Substanz 16 beigemischt. Vorteilhaft werden ausserdem noch Farbpigmente 17 beigemischt, welche die Absorptionsfähigkeit noch zusätzlich erhöhen. Aus den beiden Ausgangsmaterialien werden die Hälften als Vorformlinge gepresst, wobei in der unteren Hälfte 5 die Austrittsöffnungen 4 und in der oberen Hälfte 6 die Eintrittsöffnungen 3 sowie die Hohlkanäle 2 eingepresst werden. Die beiden Hälften 5 und 6 werden anschliessend aufeinander gelegt und unter der Einwirkung von Druck und Hitze gesintert. Dabei backen die beiden Hälften zu einer kompakten Einheit zusammen und bilden einen stabilen Dachziegel, der im innern Hohlkanäle aufweist und mit Eintritts- und Austrittsöffnungen versehen ist. Unter der hohen Temperatur schmilzt, verbrennt oder verdampft ausserdem die Beimischung 15 in der unteren Hälfte, so dass eine poröse, an Hohlräumen reiche Struktur in der unteren Hälfte entsteht.

PATENTANSPRÜCHE

1. Bedachungselement für zur Horizontalen geneigte Dächer, insbesondere Dachziegel, für den Transport einer Wärmeübertragungsflüssigkeit, d a d u r c h   g e k e n n z e i c h - n e t, dass es wenigstens einen, zwischen seiner oberen und unteren Begrenzungsebene verlaufenden Hohlkanal (2) aufweist, und dass der Hohlkanal eine gegen die obere Begrenzungsebene (18) gerichtete Eintrittsöffnung (3) und eine gegen die untere Begrenzungsebene (19) gerichtete Austrittsöffnung (4) aufweist, so dass die Öffnungen einander überlappender Bedachungselemente (1) zur Bildung eines durchgehenden Kanals aneinander anschliessbar sind.

2. Bedachungselement nach Anspruch 1, d a d u r c h   g e - k e n n z e i c h n e t, dass es aus zwei in der Dachebene verlaufenden Materialhälften gefertigt ist, wobei für die untere Hälfte (5) ein Material mit schlechterer Wärmeleitfähigkeit vorgesehen ist als für die obere Hälfte (6).

3. Bedachungselement nach Anspruch 2, d a d u r c h   g e - k e n n z e i c h n e t, dass es aus gesinterten Mineralstoffen gefertigt ist, wobei die untere Hälfte (5) eine mit Hohlräumen (7) und/oder Isolierkörpern durchsetzte Struktur aufweist.

4. Bedachungselement nach Anspruch 2, d a d u r c h g e - k e n n z e i c h n e t, dass es aus gesinterten Mineralstoffen gefertigt ist, wobei die obere Hälfte mit thermisch gut leitenden Substanzen durchsetzt ist.

5. Bedachungselement nach Anspruch 2, d a d u r c h g e - k e n n z e i c h n e t, dass die obere Hälfte (6) mit Teilchen aus Eisen- und/oder Kohlenstoffverbindungen angereichert ist.

6. Bedachungselement nach Anspruch 2, d a d u r c h g e - k e n n z e i c h n e t, dass die obere Hälfte (6) mit die Wärmeabsorption erhöhenden Farbpigmenten angereichert ist.

7. Bedachungselement nach Anspruch 1 bis 6, d a d u r c h g e k e n n z e i c h n e t, dass der Hohlkanal in der oberen Hälfte angeordnet ist.

8. Bedachungselement nach Anspruch 7, d a d u r c h g e - k e n n z e i c h n e t, dass es zwei etwa parallel verlaufende Hohlkanäle aufweist.

9. Bedachungselement nach Anspruch 8, d a d u r c h g e - k e n n z e i c h n e t, dass die Hohlkanäle mäander- oder wellenförmig verlaufen.

10. Bedachungselement nach Anspruch 1 bis 9, d a d u r c h g e k e n n z e i c h n e t, dass die Eintrittsöffnung einen grösseren Durchmesser aufweist als die Austrittsöffnung.

11. Bedachungselement nach Anspruch 10, d a d u r c h g e - k e n n z e i c h n e t, dass die Austrittsöffnung in einer vorspringenden Nase (8) angeordnet ist.

12. Bedachungselement nach Anspruch 1 bis 11, d a d u r c h g e k e n n z e i c h n e t, dass der Hohlkanal (2) im Bereich der Austrittsöffnung (4) eine Strömungsdrossel aufweist.

13. Bedachungselement nach Anspruch 2 bis 12, d a d u r c h g e k e n n z e i c h n e t, dass die obere Hälfte zum Dämpfen der Windströmung eine strukturierte Oberfläche aufweist.

14. Verfahren zur Herstellung eines Dachziegels aus mineralischen Materialien, insbesondere gemäss Anspruch 1, mit wenigstens einem Hohlkanal und mit einer oberen und einer unteren Hälfte mit unterschiedlichen Materialeigenschaften, d a d u r c h g e k e n n z e i c h n e t, dass das Material für die untere Hälfte mit einem bei Wärmezuführung sein Volumen verringernden Zuschlagstoff vermischt wird, dass die untere und die obere Hälfte als Vorformlinge gebildet werden, wobei in die obere Hälfte wenigstens ein Hohlkanal gepresst wird, und dass die beiden Hälften sodann zusammengepresst und gesintert werden, wobei der sein Volumen verringernde Zuschlagstoff in der unteren Hälfte eine poröse Materialstruktur erzeugt.

15. Verfahren nach Anspruch 14, d a d u r c h g e k e n n z e i c h n e t, dass das Material für die untere Hälfte mit Holzspänen oder Holzmehl vermischt wird.

16. Verfahren nach Anspruch 14, d a d u r c h g e k e n n z e i c h n e t, dass das Material für die obere Hälfte mit einer thermisch gut leitenden Substanz vermischt wird.

17. Verfahren nach Anspruch 14, d a d u r c h g e k e n n z e i c h n e t, dass zwischen die beiden Hälften zum Abdecken des eingepressten Hohlkanals eine thermisch gut leitende Zwischenschicht eingefügt wird.

18. Verwendung eines Bedachungselementes, insbesondere eines Dachziegels nach Anspruch 1, für den Bau eines als Sonnenkollektor wirkenden Daches, wobei die Dachziegel entweder in Längs- oder in Kreuzschichtung einander derart überlappen, dass die Eintritts- und Austrittsöffnungen miteinander kommunizieren und ein zusammenhängendes Kanalsystem für den Transport einer Wärmeübertragungsflüssigkeit bilden.

0044811

Fig. 1

Fig. 2

1

11

12

Fig. 3

21

2      6      2

5

Fig. 4

0044811

Fig. 5

## EUROPÄISCHER RECHERCHENBERICHT

### EINSCHLÄGIGE DOKUMENTE

| Kategorie | Kennzeichnung des Dokuments mit Angabe, soweit erforderlich, der maßgeblichen Teile | betrifft Anspruch |
|---|---|---|
| X | DE - A - 2 820 536 (WERNER)<br>* Seiten 3,4; Figuren 1,2 * | 1,10, 11,18 |
| | FR - A - 2 383 403 (DEROLLAND)<br>* Seite 1; Figuren 1,2 * | 1,2 |
| | FR - A - 2 399 631 (EURATOM)<br>* Seite 3; Figuren 1,2 * | 1,10, 18 |
| | DE - A - 2 529 095 (DÄUMLER)<br>* Seite 2, letzter Absatz; Seite 3, Absätze 1,2; Seite 5, letzter Absatz; Seite 6; Figur * | 1,2 |
| | DE - A - 2 724 933 (SCHNEIDER)<br>* Seite 10, Absatz 2 * | 3 |
| | DE - A - 2 604 019 (PHILIPS)<br>* Seite 5, Absatz 4 * | 5 |
| | FR - A - 2 364 414 (BERGEON)<br>* Seite 2, Zeilen 32-35; Figur * | 5,6 |
| | FR - A - 2 421 348 (LEGROS)<br>* Seite 1, Zeilen 27-28; Seite 2, Zeilen 1-5; Figur 1 *<br>-- ./. | 9 |

**KLASSIFIKATION DER ANMELDUNG** (Int. Cl.³)

F 24 J 3/02
E 04 D 1/04

**RECHERCHIERTE SACHGEBIETE** (Int. Cl.³)

F 24 J
E 04 D

**KATEGORIE DER GENANNTEN DOKUMENTE**

X: von besonderer Bedeutung
A: technologischer Hintergrund
O: nichtschriftliche Offenbarung
P: Zwischenliteratur
T: der Erfindung zugrunde liegende Theorien oder Grundsätze
E: kollidierende Anmeldung
D: in der Anmeldung angeführtes Dokument
L: aus andern Gründen angeführtes Dokument
&: Mitglied der gleichen Patentfamilie, übereinstimmendes Dokument

Der vorliegende Recherchenbericht wurde für alle Patentansprüche erstellt.

| Recherchenort | Abschlußdatum der Recherche | Prüfer |
|---|---|---|
| Den Haag | 28-10-1981 | PERROTTA |

EPA form 1503.1  06.78

Europäisches
Patentamt

**EUROPÄISCHER RECHERCHENBERICHT**

| | **EINSCHLÄGIGE DOKUMENTE** | | | KLASSIFIKATION DER ANMELDUNG (Int.Cl. ³) |
|---|---|---|---|---|
| Kategorie | Kennzeichnung des Dokuments mit Angabe, soweit erforderlich, der maßgeblichen Teile | | betrifft Anspruch | |
| | CH - A - 459 524 (BRAAS) <br> * Spalte 1, Zeilen 7-17 * <br><br> ---- | | 13 | |
| | | | | **RECHERCHIERTE SACHGEBIETE (Int. Cl. ³)** |